(19) **Europäisches Patentamt** / **European Patent Office** / **Office européen des brevets**

(11) **EP 3 287 806 B1**

(12) **FASCICULE DE BREVET EUROPEEN**

(45) Date de publication et mention de la délivrance du brevet:
**19.02.2020 Bulletin 2020/08**

(51) Int Cl.:
***G01S 5/14*** *(2006.01)* ***G01S 5/02*** *(2010.01)*

(21) Numéro de dépôt: **17191907.9**

(22) Date de dépôt: **18.12.2013**

(54) **SYSTÈME DE CARTOGRAPHIES DE DÉPLACEMENTS**

BEWEGUNGSABBILDUNGSSYSTEM

MOVEMENT MAPPING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.12.2012 FR 1262998**

(43) Date de publication de la demande:
**28.02.2018 Bulletin 2018/09**

(62) Numéro(s) de document de la (des) demande(s) initiale(s) en application de l'article 76 CBE:
**13811920.1 / 2 939 047**

(73) Titulaire: **Sapa SAS**
**75003 Paris (FR)**

(72) Inventeurs:
• **BINET, Nicolas**
**75003 PARIS (FR)**
• **BRETTE, Marion**
**75003 PARIS (FR)**
• **HOUSSAME, Yahiaoui**
**78180 Montigny Le Bretonneux (FR)**

(74) Mandataire: **Vidon Brevets & Stratégie**
**16B, rue de Jouanet**
**BP 90333**
**35703 Rennes Cedex 7 (FR)**

(56) Documents cités:
**US-A1- 2009 153 298 US-A1- 2012 077 513**

• **ANDREAS FINK ET AL: "RSSI-based indoor localization using antenna diversity and plausibility filter", POSITIONING, NAVIGATION AND COMMUNICATION, 2009. WPNC 2009. 6TH WORKSHOP ON, IEEE, PISCATAWAY, NJ, USA, 19 mars 2009 (2009-03-19), pages 159-165, XP031452389, ISBN: 978-1-4244-3292-9**
• **LUIS PENEDA ET AL: "Trilateration for indoors positioning within the framework of wireless communications", IECON 2009 - 35TH ANNUAL CONFERENCE OF IEEE INDUSTRIAL ELECTRONICS (IECON 2009) - 3-5 NOV. 2009 - PORTO, PORTUGAL, IEEE, PISCATAWAY, NJ, USA, 3 novembre 2009 (2009-11-03), pages 2732-2737, XP031630043, ISBN: 978-1-4244-4648-3**

## Description

### 1. Domaine de l'invention

L'invention a pour objet l'analyse de déplacements dans des espaces délimités. Plus particulièrement, l'invention porte sur un procédé et un système de cartographie de déplacements dans un espace délimité. L'objet a été réalisé au moyen du procédé, dispositif, système et produit programme d'ordinateur définis dans les revendications.

### 2. Art antérieur

On estime à plusieurs centaines de millions le nombre de personnes disposant d'un téléphone intelligent (smartphone) dans le monde et ce chiffre ne cesse de croitre. Ces téléphones intelligents embarquent de nombreuses fonctionnalités et disposent de plusieurs systèmes de réception et de transmission de données sans fils. Par ailleurs, il peut être utile, pour de nombreux acteurs privés ou institutionnels, de connaître les déplacements effectués par des clients ou des visiteurs dans un lieu donné. Ces déplacements, une fois connus, permettent par exemple d'optimiser les surfaces de vente, de prévoir des flux de déplacement de groupes de personnes, etc. Ainsi, des entreprises ont eu l'idée de créer des systèmes de cartographie de déplacement en utilisant les téléphones intelligents en possession des utilisateurs. Des publications antérieures se rapportent à des systèmes de repérage ou de surveillance des mobiles, mais beaucoup exigent l'utilisation de matériel ou de logiciel particulier sur l'appareil mobile. Dans le domaine des achats, le brevet US 5,295,064 décrit une méthode de suivi d'acheteurs en ajoutant du matériel de géolocalisation pour caddies, qui non seulement rend les chariots beaucoup plus cher et n'est pas capable de suivre les consommateurs qui n'utilisent pas de chariot. Dans le domaine plus général de suivi des appareils mobiles, il y a également un certain nombre de publications antérieures, mais encore une fois ils nécessitent tous une certaine interaction avec l'appareil mobile. Ainsi, dans le brevet US 6,716,101, un signal d'appel est envoyé à un appareil mobile et sa réponse est utilisée pour calculer sa position. Cette méthode oblige à la transmission d'un signal complémentaire à destination du terminal, ce qui peut interférer avec d'autres communications. Dans le brevet US 6,246,882, un procédé d'utilisation d'appareils mobiles spécialisés qui transmettent un signal de position est décrit. Cette technique ne fournit une indication utile sur le mouvement d'un groupe de personnes que si un grand nombre de personnes de ce groupe ont des dispositifs spécialisés tels que décrits dans ce brevet.

Pour sa part, la demande de brevet EP1779133 décrit un système qui ne nécessite normalement pas l'utilisation d'un matériel ou d'un signal spécifique du côté de l'utilisateur. En revanche, cette demande de brevet nécessite la transmission, par le terminal mobile, d'un identifiant, ce qui pose des problèmes de confidentialité des données. De plus, le réseau utilisé en pratique est le réseau GSM ou UMTS. Par ailleurs, cette demande de brevet ne décrit pas concrètement comment le système est implémenté. Les éléments décrits dans cette demande ne permettent pas en effet de mettre en œuvre une technique réellement bien définie. On apprend de cette demande que le système comprend de multiples capteurs, qui sont disposés dans les surfaces à cartographiées. Le téléphone transmet son identifiant à ces capteurs, lesquels déterminent la position et la direction du téléphone en analysant les différences de phases des signaux reçus par le téléphone. La publication "RSSI-based indoor localization using antenna diversity and plausibility filter" (WPNC 2009) divulgue un procédé de localisation d'une station mobile par trilatération RSSI comprenant une étape de calcul d'une puissance de réception de référence et un filtrage dit de plausibilité aux distances obtenues en fonction de la vitesse maximale. Ainsi, les systèmes de l'art antérieur ne proposent pas de solution simple à mettre en œuvre et qui garantisse l'anonymat des utilisateurs et la sécurité des données recueillies.

### 3. Résumé de l'invention

L'invention ne présente pas ces inconvénients de l'art antérieur. Plus précisément, l'invention permet de disposer d'une solution simple et performante d'obtention de données de parcours de personnes dans un espace déterminé. Plus particulièrement, l'invention se rapporte à un procédé détermination de données représentatives d'un déplacement d'un terminal de communication, appelé particule, au sein d'un espace géographique prédéterminé, dit espace à cartographier. Le procédé caractérisé comprend :

- une phase d'obtention de données représentatives de puissances d'émissions d'au moins un signal de transmission de données au sein dudit espace à cartographier, délivrant un ensemble de données capturées ;
- une phase de filtrage des données dudit ensemble de données capturées en fonction d'au moins un paramètre de filtrage prédéterminé, délivrant un ensemble de données filtrées ;
- une phase de calcul, à l'aide dudit ensemble de données filtrées, de données représentatives d'au moins un déplacement effectué par ladite particule au sein dudit espace à cartographier.

Ainsi l'invention permet de définir les parcours des terminaux (particules) dans un espace à cartographier de manière simple, sans nécessiter de dispositif particulier. En effet, en se basant sur l'obtention d'une puissance de signal émis, l'invention offre une solution simple au problème susmentionné.

Selon un mode de réalisation particulier ladite phase d'obtention de données comprend une étape préalable de calibration d'un réseau de capteurs disposés au sein dudit espace à cartographier, comprenant, pour au moins un capteur une étape de calcul d'une puissance de réception de référence.

Ainsi, en calculant une puissance de réception de référence, on édifie un référentiel de captation de données de puissance qui permet de capter n'importe quel signal de façon simple.

Selon un mode de réalisation particulier ladite phase de filtrage des données comprend :

- une étape de tentative d'identification, en fonction dudit au moins un paramètre de filtrage prédéterminé, d'au moins une donnée représentative d'au moins une particule parasite au sein desdites données capturées ; et

lorsque ladite étape de tentative d'identification délivre un résultat positif :

- une étape de suppression desdites données liées audit au moins une particule parasite, délivrant lesdites données filtrées.

Ainsi, on élimine facilement des données non nécessaires ou jugées non pertinentes.

Selon une caractéristique particulière ledit au moins un paramètre de filtrage prédéterminé appartient au groupe comprenant :

- une durée d'émission de signal ;
- un nombre d'occurrence de données identifiant une particule ;
- une puissance d'émission de signal.

Selon un mode de réalisation particulier ladite phase de calcul, à l'aide dudit ensemble de données filtrées, de données représentatives d'au moins un déplacement effectué par ladite particule au sein dudit espace à cartographier comprend :

- une étape d'obtention de la liste des positions connues de ladite particule, ladite liste comprenant au moins deux positions successives ;
- pour chaque couple de positions successives de ladite liste, une étape de calcul d'un sous-chemin parcouru entre les deux positions de ce couple de positions successives, délivrant une liste de sous chemins ;
- une étape de concaténation des sous-chemins de la liste de sous chemins pour former un chemin global.

Ainsi, on calcul des sous chemins entre les positions connues ou estimées de la particule. Ces sous chemins permettent par la suite d'obtenir un chemin global.

Selon une caractéristique particulière ladite étape d'obtention de la liste des positions connues de ladite particule comprend :

- une étape de détermination d'un ensemble de zones probables de positionnement (PPZ) de ladite particule en fonction :

  - desdites puissances d'émission dudit ensemble de données filtrées associées aux capteurs d'un réseau de capteurs ;
  - d'une représentation matricielle dudit espace à cartographier;

- une étape de détermination d'au moins deux positions probables de ladite particule, à au moins deux moments différents, en fonction d'une loi statistique et/ou de contraintes associées audit espace à cartographier.

Dans d'autres modes de réalisation, l'invention se rapporte également aux capteurs et aux dispositifs permettant la mise en œuvre des procédés préalablement décrits. Dans un autre mode de réalisation, l'invention se rapporte également à un système pour la mise en œuvre de l'invention telle que décrite dans les procédés précédents. Il est entendu que des procédés indépendants de captures, par les capteurs, des données brutes et de traitement, par un serveur de traitement, des données brutes capturées font intégralement partie de l'invention.

Selon un mode de réalisation particulier, l'invention se rapporte à un dispositif de détermination de données représentatives d'un déplacement d'un terminal de communication, appelé particule, au sein d'un espace géographique prédéterminé, dit espace à cartographier. Selon l'invention, il comprend :

- des moyens d'obtention de données représentatives de puissances d'émissions d'au moins un signal de transmission de données au sein dudit espace à cartographier, délivrant un ensemble de données capturées ;
- des moyens de filtrage des données dudit ensemble de données capturées en fonction d'au moins un paramètre de filtrage prédéterminé, délivrant un ensemble de données filtrées ;
- des moyens de calcul, à l'aide dudit ensemble de données filtrées, de données représentatives d'au moins un déplacement effectué par ladite particule au sein dudit espace à cartographier.

Dans un autre mode de réalisation, l'invention se rapporte à un système de détermination de données représentatives d'un déplacement d'un terminal de communication, appelé particule, au sein d'un espace géographique prédéterminé, dit espace à cartographier. Ce système comprend :

- au moins un capteur de puissance d'émissions d'au moins un signal de transmission de données au sein dudit espace à cartographier, délivrant un ensemble de données capturées ;
- au moins un réseau de communication par lequel les données capturées sont transmises ;
- au moins un dispositif de détermination, connecté audit réseau de communication et comprenant :

  - des moyens d'obtention desdites données capturées ;
  - des moyens de filtrage des données dudit ensemble de données capturées en fonction d'au moins un paramètre de filtrage prédéterminé, délivrant un ensemble de données filtrées ;
  - des moyens de calcul, à l'aide dudit ensemble de données filtrées, de données représentatives d'au moins un déplacement effectué par ladite particule au sein dudit espace à cartographier.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

## 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 illustre un système de manière général ;
- les figure 2a, 2b et 2c sont des illustrations de la trilatération statistique de l'invention ;
- la figure 3 illustre la structure physique d'un capteur d'un réseau de capteur ;
- la figure 4 illustre la structure d'un serveur de traitement selon l'invention ;
- la figure 5 illustre un arbre de représentation des chemins les plus fréquents ;
- la figure 6 illustre une probabilité de puissance de réception pour une case donnée.

## 5. Description d'un mode de réalisation

Dans ce mode de réalisation, on cherche à simplifier et à automatiser tant la capture des données que leurs exploitations ultérieures. Ceci est possible d'une part en segmentant les processus (obtention de données brutes puis corrélation de ces données brutes) et d'autre part en mettant en œuvre les optimisations présentées ci-après.

### 5.1. Rappel du principe de l'invention

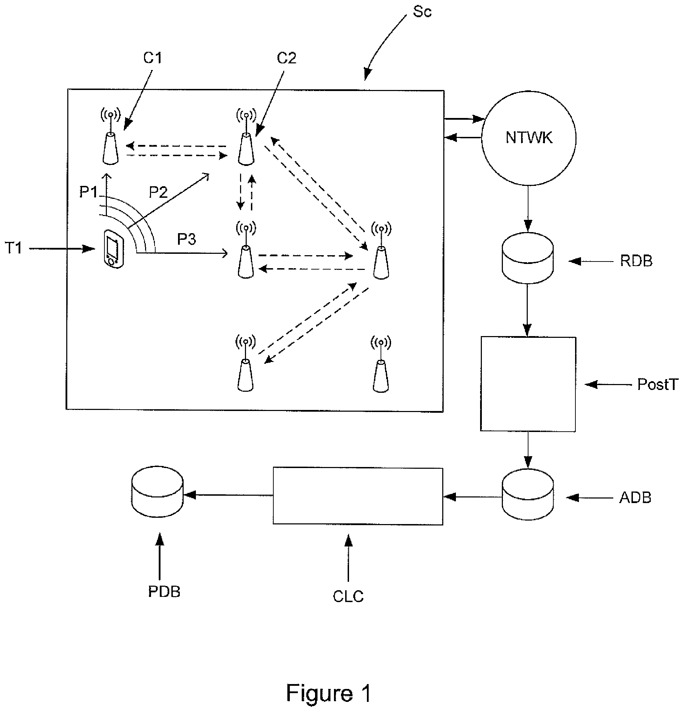

Comme explicité, le système de l'invention offre de multiples avantages. Pour débuter, ce système ne nécessite pas de réglage particulier. Il est uniquement nécessaire de positionner des capteurs à de multiples endroits de l'espace à cartographier. Le système se calibre ensuite de manière automatique, sans nécessiter d'intervention humaine. Ensuite le système possède la capacité de s'auto-synchroniser, ce qui n'est pas envisagé par les systèmes antérieurs. En effet, l'une des problématiques associée à l'utilisation de multiples capteurs tient à la synchronisation de leurs horloges. Il est bien connu que les composants utilisés pour construire des dispositifs électroniques présentent des différences relativement importantes. Ainsi, même en réglant précisément l'heure de deux capteurs à un temps T0, des différences plus ou moins importantes sont observées entre les heures de ces deux capteurs au bout de quelques temps. Or, la synchronisation de ces capteurs est importante pour pouvoir déterminer la position d'un dispositif de manière assez précise. Les systèmes de positionnement par satellite GPS est soumis à des problématiques similaires. Cependant, à la différence du GPS, et pour des questions de coûts, le système objet de la présente demande de brevet ne peut pas mettre en œuvre une horloge atomique dans chaque capteur. Par ailleurs, pour assurer la confidentialité des données obtenues, le système ne se base pas sur l'utilisation de données personnelles de l'utilisateur. Au contraire, dès l'origine, les données de l'utilisateur sont remplacées par des données anonymes. Enfin, le système comprend au moins une entité de traitement, laquelle assure l'organisation et la gestion des données. Plus précisément, en lien avec la figure 1, le système objet de la demande de brevet est mis en œuvre de la façon suivante :
Une première phase consiste en la calibration des capteurs du réseau de capteurs une fois qu'ils ont été positionnés. Une seconde phase consiste en la synchronisation initiale de ces capteurs. Une troisième phase consiste en la capture des données en provenance des dispositifs (ordinateurs, terminaux mobiles, tablettes) qui circulent dans l'espace à cartographier. Ces données sont anonymisées dès leurs captures. Il s'en suit une phase de synchronisation en ligne et un stockage des données brutes obtenues.

La phase suivante consiste traiter ces données brutes pour permettre leurs interprétations.

En d'autres termes, le système comprend d'une part des moyens d'obtention de données individuelles, brutes, qui sont anonymes (il s'agit du réseau de capteurs) et stockées dans un entrepôt de données brutes et des moyens de traitement et de corrélations de ces données individuelles pour former des données consolidées (c'est-à-dire représentatives des déplacements des particules) aptes à être interprétées.

Plus particulièrement, en relation avec la figure 1, le système met en œuvre un procédé détermination de données représentatives d'un déplacement d'un terminal de communication (T1), appelé particule, au sein d'un espace géographique prédéterminé, dit espace à cartographier (Sc). Le procédé de l'invention comprend :

- une phase d'obtention de données représentatives de puissances d'émissions (P1, P2, P3, etc.) d'au moins un signal de transmission de données au sein dudit espace à cartographier, délivrant un ensemble de données capturées, stockées dans une base de données (RDB), auquel le réseaux de capteurs (C1, C2, etc.) est connecté par l'intermédiaire d'un réseau de communication (NTWK) ;

- une phase de filtrage des données, par un dispositif de filtrage (PostT), dudit ensemble de données capturées en fonction d'au moins un paramètre de filtrage prédéterminé, délivrant un ensemble de données filtrées (ADB) stocké dans une base de données ;

- une phase de calcul, par un serveur de traitement (CLC), à l'aide dudit ensemble de données filtrées, de données représentatives d'au moins un déplacement effectué par ladite particule au sein dudit espace à cartographier, elles aussi stockées dans une base de données.

Il est clair que d'autres modes de réalisations peuvent être envisagées sans qu'ils soient exclus de la portée de l'invention. Par exemple, la connexion à un réseau de communication ou l'utilisation de multiples bases de données peut être évitée en fonction des modes de réalisation. De même, il n'est pas obligatoire de disposer d'un serveur de traitement CLC et d'un dispositif de filtrage particulier PostT. Dans un mode de réalisation particulier de l'invention, un capteur particulier du réseau de capteur (appelé capteur « maitre ») peut tout à fait remplir ces fonctions. Auquel cas les données sont produites « sur site », c'est-à-dire au sien même de l'espace à cartographier. Le système décrit dans l'invention peut être utilisé dans de nombreuses applications dont certaines sont données ci-dessous à titre illustratif et nullement limitatif :

- Procédé utilisé pour localiser les détenteurs de téléphones mobiles présents dans un espace de vente, par exemple à l'intérieur d'un magasin, d'un centre commercial, etc.

- Procédé utilisé pour localiser et analyser les flux des visiteurs des grands centres administratifs, dans les gares, dans les aéroports ;

- Procédé utilisé pour localiser, analyser les zones d'affluence et les points de blocage dans les centres hospitaliers ;

- Procédé utilisé pour mesurer les files d'attente et les flux dans les salles d'exposition de musée.

5.2. Description d'un mode de réalisation

5.2.1. Capture des données brutes.

La première phase du processus consiste en la capture de données brute. Cette capture permet d'obtenir des données de base qui seront traitées par la suite. Dans ce mode de réalisation de l'invention, les données brutes sont les suivantes : identifiant d'une particule (d'un terminal), heure de capture et puissance du signal capturé. Cependant, pour pouvoir obtenir ces données, plusieurs opération préalables doivent ou peuvent être effectuées en fonction des conditions d'utilisation et de paramètres liés aux capteurs. Les optimisations suivantes peuvent ou non être utilisées, en fonction du mode de réalisation de l'invention. Par exemple, si les horloges des capteurs sont parfaitement synchrones, il n'est pas nécessaire de réaliser une synchronisation. De même, si la puissance de réception à un mètre est connue, il n'est pas nécessaire de réaliser un auto calibrage des capteurs du réseau de capteurs.

5.2.1.1. Calibration du réseau de capteurs.

Comme explicité, la première phase consiste à réaliser une auto-calibration des capteurs du réseau de capteurs. Ce calibrage est rendu nécessaire par le fait que la position d'un terminal est déterminée par sa distance avec le capteur qui enregistre sa position. Ainsi, si un terminal T1 est considéré comme étant à une distance d1 d'un premier capteur C1, une distance d2 d'un deuxième capteur C2 et une distance d3 d'un troisième capteur C3, il est possible de déterminer sa position dans l'espace à cartographier (voir par la suite). Cette technique générale est bien connue, mais a été améliorée dans le cadre de l'invention. Dans ce mode de réalisation, la détermination de la distance $d$ entre un capteur et un terminal est réalisée au niveau du capteur lui-même. Or, le capteur ne mesure pas de distance mais capteur une puissance de signal émis par le terminal T1. Il est donc nécessaire de transformer cette puissance en distance. La puissance de réception au niveau du récepteur, $P_r$, est définie par la fonction $f$ suivante :

$$P_r = f(P_0, \alpha, d)$$

Avec : $P_0$ est la puissance de réception à une distance de 1 mètre ;
« $\alpha$ » est une constante représentant l'atténuation ;
et « $d$ » la distance entre le récepteur et l'émetteur.

Plus précisément, la formule est la suivante : $P_r = P_0 - 10. \alpha.log(d)$.

Pour déterminer la distance d'un terminal à un récepteur, les inventeurs ont donc eu l'idée d'inverser cette fonction pour déterminer « $d$ », au niveau de chaque capteur. Cependant, pour que cela soit possible, il est nécessaire de connaître la valeur de $P_0$ et de $\alpha$. « $\alpha$ » possède une valeur généralement admise pour les milieux fermés qui est donc utilisée. En revanche, il est nécessaire de déterminer $P_0$. Une première méthode peut consister à mesurer manuellement cette valeur sur le lieu d'installation (dans l'espace à cartographier). Cette technique donne le résultat attendu mais elle est longue et compliquée particulièrement lorsque les capteurs sont installés en hauteur. Par voie de conséquence, cette technique est couteuse et non optimale. Une deuxième technique, objet de la présente demande de brevet, consiste à réaliser une auto calibration (ou auto-calibrage).

Selon l'invention, l'auto-calibrage est réalisé grâce à un processus au cours duquel les capteurs écoutent et émettent alternativement sur de courtes périodes de temps. De façon aléatoire, un capteur CA aura écouté un capteur CB et émis vers le capteur CB et réciproquement. Au bout d'un certain temps, le capteur CA aura écouté au moins une fois tous les autres capteurs. Par exemple, dans le cas de six capteurs, le capteur CA aura écouté les capteurs {CB, CC, CD CE, CF} au moins une fois. Au cours de ce processus d'écoute, le capteur CA connaît la puissance des signaux reçus de la part des capteurs {CB, CC, CD CE, CF}. Il dispose donc d'au moins une mesure $P_{AB}$ de la puissance, qui est la puissance mesurée par le capteur CA du signal reçu du capteur CB. Or, dans le cadre de l'installation des capteurs, une donnée a été fournie aux capteurs : il s'agit de la distance qui sépare ce capteur d'au moins un autre capteur présent dans la zone à cartographier. En effet, au cours de l'installation des capteurs dans la zone à cartographier, l'utilisateur sait quelles sont les distances qui séparent les capteurs. Il peut donc fournir cette information aux capteurs. Ainsi, la résolution de la relation entre la puissance et la distance entre le capteur CA et le capteur CB (soit $P_{AB}=f(P_{0A}, \alpha, D_{AB})$), permet de déterminer $P_{0A}$, la puissance de réception à 1 mètre du capteur CA de façon automatique. Les autres capteurs {CB, CC, CD CE, CF} agissent de même pour obtenir leur propre puissance de réception à 1 mètre. Les données de calibrage de l'ensemble des capteurs peuvent donc être déterminées de façon automatique sans aucune intervention humaine et notamment sans utilisation de matériel de calibrage complémentaire.

5.2.1.2. Synchronisation des Captures de données brutes.

Une autre problématique est liée à la synchronisation des données enregistrées au sein des capteurs. Cette synchronisation est nécessaire pour la corrélation ultérieure des données individuelles. Les données individuelles sont enregistrées dans une structure de données de type fichier à plat. Cette structure de données de type « fichier à plat » est appelée fichier de capture. Un fichier de capture recense l'heure et la puissance de réception des émissions d'une particule. Une particule est par exemple un terminal d'un utilisateur se déplaçant dans l'espace à cartographier. Comme cela est explicité par la suite, lors de la phase de traitement des données, les différentes positions d'une particule dans l'espace à cartographier sont déterminées en corrélant les informations des différents capteurs par trilatération.

Malheureusement, l'heure système d'un capteur donné n'est généralement pas identique à celle d'un autre capteur. Il en résulte que, pour une même particule, à un instant donné, les heures qui sont enregistrées sur les fichiers de capture de deux capteurs différents peuvent être distinctes de quelques secondes, rendant en pratique ces données inutilisables. Il faut détecter et corriger cet écart en synchronisant les captures. Afin de synchroniser les captures d'un même réseau de capteurs, il convient de désigner un capteur du réseau comme le capteur source dont l'heure est correcte et de décaler les capteurs adjacents pour s'aligner sur l'heure de ce capteur source. Par itération, on synchronise l'ensemble des capteurs.

Dans ce mode de réalisation de l'invention, une méthode statistique est employée pour synchroniser les heures de capture. Cette méthode statistique est basée sur le fait qu'un grand nombre de données sont enregistrées. On suppose également, dans ce mode de réalisation, que chaque capteur a une horloge interne qui dévie de l'heure des autres capteurs de façon constante. Ainsi, par exemple, la déviation de l'heure indiquée par l'horloge HA du capteur CA est constante et la déviation de l'heure indiquée par l'horloge HB du capteur CB est constante. Ainsi, l'horloge HA a une déviation constante Dev A et l'horloge HB a une déviation constante Dev B. La relation entre les deux horaires des capteurs CA et CB est donc définie par la fonction : $H_B=Y + X \times H_A$, avec : $X = Dev\ B \div Dev\ A$. Dans ce mode de réalisation, on suppose donc que la déviation entre deux horloges données est une fonction affine. On suppose en plus que le coefficient directeur de cette fonction est égal à un (X=1) ce qui correspond à une déviation identique de l'horloge HA et de l'horloge HB. Ceci n'est bien sûr qu'une supposition de ce mode de réalisation. D'autres modes de réalisation peuvent supposer une formulation différente.

Ces hypothèses posées, la méthode mise en œuvre consiste à sélectionner des particules de synchronisation (particules à occurrence diverses qui servent d'étalon de mesure) et à calculer des matrices des écarts entre les heures de captures des deux capteurs pour sélectionner dans cette matrice l'écart apparaissant le plus souvent. Les particules de synchronisation sont sélectionnées de la façon suivante :

- on définit des groupes de particules en fonction du nombre de captures qui sont considérées comme représentatives.

On définit les groupes avec peu de captures (<10), un nombre moyen de captures (>10 et <30) et beaucoup de captures (>100) ;
- dans ces groupes déterminés, on sélectionne au hasard un nombre n prédéterminé de particules.

Pour chaque particule ainsi sélectionnée, on dispose d'une liste de captures à partir d'un capteur CA et une liste de capture à partir d'un capteur CB.

Chaque liste (une par capteur) comprend une pluralité d'enregistrements, un enregistrement d'une liste comprenant un triplet composé d'un identifiant de la particule, une heure de capture et une puissance de réception. À partir de deux listes (par exemple les listes issues des capteurs CA et CB), une matrice $M$ est construite, comprenant les coefficients $M_{ij} = a_i - b_j$, avec : « $a$ » et « $b$ » les heures des capteurs. Plus précisément, « $a$ » correspond à l'heure de capture de la particule par le capteur CA et « $b$ » correspond à l'heure de capture de la particule par le capteur CB. Une fois cette matrice $M$ construite, elle est parcourue et l'écart entre les horloges des capteurs CA et CB, pour cette particule, est déterminé comme étant la valeur $M_{ij}$ qui apparait le plus souvent dans la matrice $M$. On obtient ainsi, pour chaque particule sélectionnée, un écart calculé. Les inventeurs ont identifié qu'il était important de réaliser une matrice des différences car comme les horloges des capteurs ne sont pas synchronisées et que l'on ne sait pas quand les captures des capteurs sont faites les unes par rapport aux autres (il n'est pas assuré par exemple que la première capture du capteur CA soit celle qui corresponde à la première capture du capteur CB), il faut rechercher un écart à l'aveugle. La meilleure façon de rechercher l'écart à l'aveugle est justement de calculer tous les écarts possibles (dans la matrice) et d'identifier celui qui apparaît le plus souvent.

L'écart final entre les deux horloges des capteurs CA et CB est celui apparaissant le plus souvent sur l'ensemble des particules. Ainsi, on obtient l'écart probable (Ep) entre CA et CB. Cet écart probable est par la suite soustrait aux captures du capteur CB (On considère que le capteur CA est le capteur de référence). La même procédure est appliquée aux autres capteurs à partir d'un capteur de référence (dans l'exemple il s'agit de CA). Lorsqu'un capteur de référence et un capteur courant ne partagent pas de données communes (car ils sont physiquement trop éloignés et que les données obtenues ne sont pas pertinentes), un autre capteur de référence est utilisé.

Dans un autre mode de réalisation, la synchronisation peut avoir lieu d'une façon différente lorsqu'une une information plus générale sur les paquets récupérés est conservée lors de la capture. Dans ce mode de réalisation, outre les adresses MAC cryptées et la puissance de réception des paquets, on conserve un identifiant crypté résultat de l'application d'une fonction de hachage sur l'intégralité du paquet reçu. Cela permet d'avoir une meilleure correspondance entre les paquets vus par les différents capteurs. L'identifiant crypté est utilisé afin d'avoir une meilleure synchronisation, importante pour la suite du processus.

5.2.1.3. Anonymisation des données.

Afin de pouvoir déterminer la position et la parcours d'une particule donnée il est nécessaire d'identifier cette particules. Plusieurs types de données peuvent être utilisés pour pouvoir identifier une particule. En revanche, il est nécessaire d'assurer le caractère anonyme de ces identifiants. Dans ce mode de réalisation de l'invention, on choisit de récupérer les adresses MAC des terminaux (qui sont émises par les terminaux lorsqu'ils cherchent à s'accrocher à un réseau, par exemple un réseau de type wifi). Une particule correspond donc à un terminal et on utilise comme identifiant l'adresse MAC de celui-ci. Pour garantir l'anonymat, on met en œuvre un « Salted hashing ». Pour assurer le caractère anonyme des données capturées, il s'agit d'ajouter au principe de hachage par SHA-1, un « salt » ou mot secret. En d'autres termes, dans ce mode de réalisation, l'adresse MAC est hashée une première fois, puis, on ajoute à la signature obtenue un mot secret auquel on applique à nouveau un hashage.

La donnée d'identification enregistrée est donc une donnée anonyme. Il n'est pas possible d'identifier l'utilisateur auquel cette donnée est associée. La donnée d'identification est rendue anonyme dès l'origine, à savoir avant l'enregistrement du triplet composé de l'identifiant de la particule, de l'heure de capture et de la puissance de réception.

Les données brutes capturées, comme explicité supra peuvent être des données issues des tentatives de connexion WiFi. Par ailleurs, les récents développements de réseaux 3G et 4G permettent une plus large couverture des zones étudiées. Dans une autre mode de réalisation, des données captées par un capteur 3G peuvent également être utilisées. Le processus est identique à celui précédemment mentionné, à la différence que l'identification a lieu à l'aide d'un code IMSI (qui peut être temporaire) caractéristique d'une carte SIM. Celui-ci est rendu anonyme par la même fonction de hachage (dès la capture) que celle décrite préalablement.

5.2.2. Filtrage des données.

La deuxième phase du processus consiste à effectuer un filtrage des données capturées. En effet, parmi l'ensemble des données capturées, nombreuses sont celles qui ne sont pas pertinentes vis-à-vis de l'objet de l'invention. Il s'agit de données parasites émises par des dispositifs parasites. Ainsi, au moment du post-traitement (ou à un autre moment plus pertinent en fonction de mode de réalisation) les données sont filtrées. De façon automatique, sont exclues les données parasites provenant :

- des émetteurs fixes préalablement déterminés. Ces émetteurs sont repérés par la réception d'un beacon (paquet de données émis par un émetteur fixe). Chaque donnée provenant d'un de ces émetteurs fixes est éliminée de l'analyse.

Les émetteurs fixes exclus sont par exemple les routeurs WiFi. Un émetteur fixe émet en permanence mais à une forme de communication différente des émetteurs permanents car c'est un fournisseur d'accès pour les autres communicants WiFi.

- des émetteurs dits « permanents » repérés en fonction de la durée d'émission des ondes. Si cette durée est supérieure à un laps de temps déterminé, les données seront exclues de l'analyse. Les émetteurs permanents peuvent être : les téléphones des vendeurs, les ordinateurs, tablettes, imprimantes sans fil, télévisions connectées en démonstration dans l'espace étudié, etc. Cette liste n'est pas exhaustive. Pour que ces émetteurs permanents ne soient pas pris en compte dans le calcul, ils sont donc filtrés en fonction du temps de présence. Dans ce mode de réalisation, un émetteur dont la durée de présence est supérieure à deux ou trois heures est considéré comme permanent et est exclu. Cette valeur est bien entendue variable en fonction d'une part de la surface à cartographier et d'autre part en fonction du nombre d'émetteurs permanents.

En fonction du mode de réalisation, les émetteurs fixes sont filtrés au moment du « post-traitement » alors que les émetteurs permanents sont filtrés lors du « traitement de données ». Ceci est variable et dépend d'une part de l'autonomie des capteurs du réseau de capteurs (sont-ils capables de prendre des décisions) et d'autre part de la configuration générale du système (a-t-on par exemple un traitement centralisé des données).

5.2.3. Traitement des données brutes.

Comme indiqué préalablement, le traitement des données consiste à corréler les données brutes obtenues et à leur donner un sens. En effet, il ressort des techniques précédemment décrites dans les documents de l'art antérieur, par exemple, qu'un des postulats implicites sur lesquels ces techniques antérieures se basent est que la localisation de l'utilisateur peut être connue en permanence. Or, il est clair que cela ne peut pas être le cas, et ce pour de nombreuses raisons (par exemple, de par la présence d'interférences ou dans le cas ou des dispositifs sont ajoutés à des chariots, parce que l'utilisateur peut se déplacer dans la surface de vente sans son chariot).

Ainsi, il est nécessaire de prévoir des méthodes qui d'une part permettent d'assurer une localisation partielle des particules dans l'espace à cartographier et d'autre part permettent de définir un réel chemin parcouru par la particule alors même que l'on ne dispose à son sujet que d'informations incomplètes.

5.2.3.1. Positionner les particules par trilatération

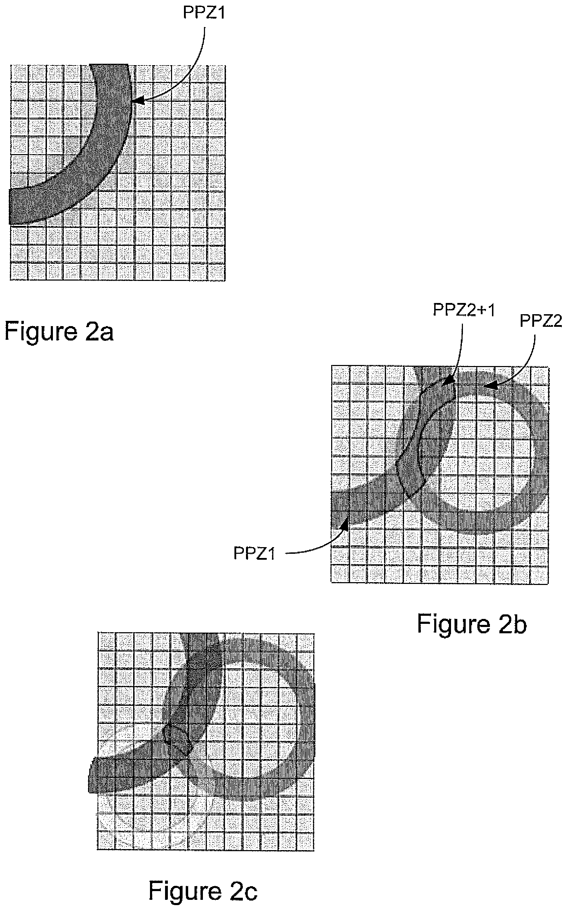

La méthode de positionnement par trilatération est une technique connue qui nécessite au moins trois informations de distance pour déterminer une localisation. En revanche, les inventeurs ont mis au point une technique qui ne nécessite qu'une information partielle pour l'obtention de la position probabiliste de la particule. En effet, les données brutes récupérées lors de la capture des données brutes comprennent la puissance du signal qui définit la distance entre le capteur et la particule. Cette méthode est illustrée par les figures 2a, 2b et 2c. Quand, à un instant donné, une particule est vue par au moins trois capteurs, par trilatération, la position de la particule est déterminée. Les inventeurs ont mis en place une méthode permettant de définir la position d'une particule repérée par un, deux, trois ou plus de capteurs.

Pour ce faire, la méthode de trilatération est complétée par l'usage de données complémentaires formées d'une part par des contraintes systémiques liées à l'espace à cartographier (telles que la position d'une cloison par exemple, d'une zone infranchissable, etc.) et d'autre part par un pavage de l'espace à cartographier.

En d'autres termes, préalablement à l'application de la trilatération, l'espace à cartographier est découpé en cases. Une matrice représente donc l'espace à cartographier. Au sein de cette matrice, un certain nombre de cases sont « indisponibles » : il s'agit par exemple des cases correspondant à des emplacements de murs ou d'étalages (quand il s'agit d'un magasin). Ainsi, en lieu et place des données qui peuvent manquer pour le positionnement d'une particule par trilatération, les inventeurs ont eu l'idée d'utiliser les données de la carte elle-même pour positionner la particule.

Plus précisément, la détermination de la position est mise en œuvre de la façon suivante :

On appelle « PPZ » les zones de présence déterminées. À un instant donné, chaque émetteur possède une liste de n-uplets comprenant une puissance associée à chaque particules :

Capteur 1 = {P11 ; P12 ; P13 ; ... ; $P1n_1$}

Capteur 2 = {P21 ; P22 ; P23 ; ... ; P2n$_2$} ...
Capteur k = {Pk1; Pk2 ; Pk3 ;... ; Pkn$_k$}

Pour chaque capteur 'i', la puissance des émissions de la particule vers ce capteur est fonction de la distance les séparant, D :

$$P_i = P_{0_i} - 10 * \alpha * \log_{10}(D) + X_\sigma$$

Où $P_{0_i}$ est l'atténuation à 1 mètre de la puissance de réception, $\alpha$ est le facteur d'atténuation de cette puissance, et $X_\sigma$ est une variable aléatoire de loi Normale possédant une moyenne nulle et un écart-type $\sigma$. Ce dernier terme dans l'équation permet de prendre en compte les variations dans les atténuations dues à l'hétérogénéité du milieu de transmission (présence d'obstacles, de murs, etc.).

Pour un capteur 'i', l'estimation de la distance entre ce capteur et une particule est effectué en considérant un échantillon de n (n>1) puissances {Pi1; Pi2 ; ... ; Pin} mesurées à un moment donné. Pour cela, il est nécessaire d'estimer à partir de ces puissances une moyenne :

$$Pm = \frac{1}{n} * \sum_{j=1}^{n} Pij$$

et une variance, qui est la même que celle de la variable aléatoire $X_\sigma$ :

$$S_{\sigma^2} = \frac{1}{n-1} * \sum_{i=0}^{n} (P_m - Pij)^2$$

À partir de cette estimation, il est possible de calculer un intervalle de confiance à 95% de la variable aléatoire $X_\sigma$ :

$$\left[ X_\sigma^{inf}, X_\sigma^{sup} \right], X_\sigma^{inf} = -X_\sigma^{sup} = -t_{95}^{n-1} * \sqrt{\frac{S_{\sigma^2}}{n}}$$

( $t_{95}^{n-1}$ est le quantile d'ordre 95 à n-1 degré de liberté, et est utilisé afin d'estimer l'intervalle de confiance sur des échantillons de petites tailles).

Il devient alors possible d'estimer un intervalle pour la distance séparant la particule du capteur i. En effet, en inversant la formule ci-dessus fournissant la puissance à partir de la distance, il est possible de borner cette distance D :

entre une distance minimale : $D_{inf} = 10^{\left( \frac{P_{0_i} - Pm + X_\sigma^{inf}}{10*\alpha} \right)}$ ;

et une distance maximale : $D_{sup} = 10^{\left( \frac{P_{0_i} - Pm + X_\sigma^{sup}}{10*\alpha} \right)}$.

La distance minimum et la distance maximum au capteur permet de déterminer un anneau dans lequel est positionnée la particule. Par ailleurs, le plan (l'espace à cartographier) est découpé en «°cases°». Les anneaux définis par les distances min et max définissent alors un ensemble de cases probables pour chacune des captures.

Chaque case correspond à une information de présence représentée par un bit :

- Case = {0} si la particule ne peut être présente dans la case ;
- Case = {1} si la particule peut être dans la case.

Avec un capteur, un ensemble de cases représentant une partie de l'anneau permet de positionner la particule de façon probabiliste. Avec 2 ou 3 capteurs, l'intersection des cases probables permet de définir précisément la position de la particule. Plus la taille des cases est petite plus le positionnement sera précis. Il en est de même pour le nombre de capteurs.

Les schémas des figures 2a, 2b et 2c représentent trois cas de positionnement de particules avec un, deux et trois capteurs. Dans la figure 2a, un seul capteur est utilisé. Une zone de présence (PPZ1), est constituée d'un arc comprenant un certain nombre de cases probables. Dans la figure 2b, on a deux zones de présences (PPZ1, PPZ2) qui permettent la détermination d'une première intersection (PPZ1+2) correspondant à un certain nombre de cases dans laquelle la particule est susceptible de se trouver. Dans la figure 2c, on a successivement la détermination de trois zones de présence (PPZ1, PPZ2 et PPZ3) qui conduisent à la détermination d'une deuxième intersection (PPZ1+2+3) plus réduite. Une fois ces zones de présence déterminées, les conditions particulières de l'espace à cartographier sont appliquées (comme par exemple les cloisons, les espaces de stockages, les murs, etc.), pour limiter encore les possibilités de présence de la particule. Puis une loi normale est appliquée sur les cases restantes pour déterminer la position probable de la particule (voir section suivante).

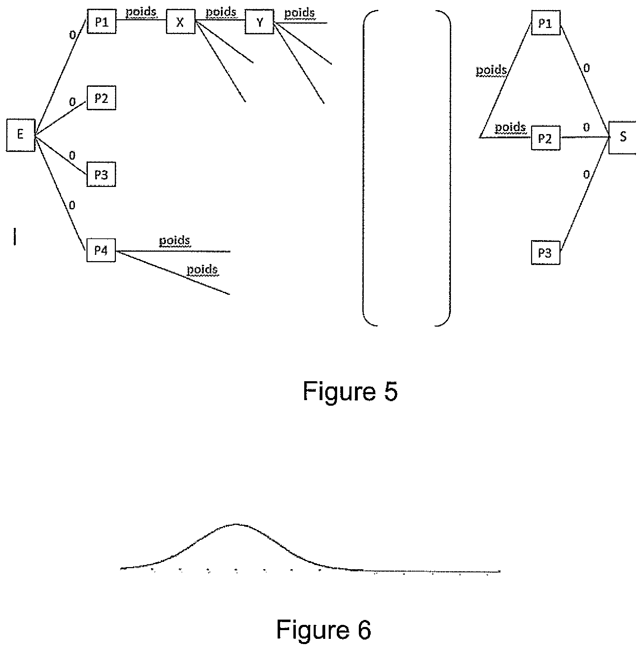

Dans un mode de réalisation complémentaire, il est proposé d'affiner le calcul de la puissance de réception. En effet, les inventeurs ont constaté l'existence d'un bruit impactant la mesure. Les inventeurs ont réussi à modéliser ce bruit qui impacte la mesure de la puissance. Celui-ci se modélise par un bruit gaussien d'un sigma $\sigma$ propre au capteur et à son environnement. Selon l'invention, ce sigma $\sigma$ est évalué grâce aux paquets reçus par un capteur donné en provenance de ses [capteurs] voisins. À chaque case de l'espace cartographié est associée une puissance de réception théorique. Cette association est faite en fonction de la distance au capteur et de la topologie des lieux. On obtient alors une densité de probabilité comme une loi normale centrée sur la puissance théorique reçue obtenue en utilisant la loi définie ci-dessus d'écart-type sigma $\sigma$. La figure 6 donne un exemple de loi de probabilité pour la puissance de réception d'un paquet pour une case de l'espace. Dans l'exemple, nous avons une gaussienne centrée en -90 dB. Pour déterminer la densité de capture d'une particule, on utilise un filtrage bayésien. Soit $X$ la position de l'émetteur, $Y$ la puissance reçue. Pour une case c du plan, et un paquet reçu à la puissance *-82*, on cherche :

$$P(X = \{c\}, Y = -82) = P(X = \{c\}|Y = -82) \times P(Y = -82)$$

Pour la probabilité conditionnelle $P(X = \{c\}|Y = -82)$, on lit la valeur en utilisant la densité de probabilité de la figure précédente 6. La loi de probabilité de $Y$ tient compte du bruit gaussien évoqué supra. On obtient ainsi pour chaque case de l'espace à cartographier une valeur. La matrice est normalisée afin d'avoir une densité de probabilité : la somme des valeurs doit être égale à un. Chaque paquet reçu donne lieu à une matrice de position probabiliste. Les différentes matrices sont ensuite combinées pour ne conserver qu'une unique matrice donnant la matrice de présence de l'individu à un instant donné. La particule est alors placée au maximum de probabilités de la nouvelle carte. Ce mode de réalisation permet de prendre en compte la présence de bruit et donc de positionner la particule de manière plus précise.

5.2.3.2. Déterminer des chemins

Une fonctionnalité importante du système consiste à déterminer les chemins qui sont empruntés par les particules et donc à cartographier l'espace. Cette cartographie est effectuée sur la base des positions successives des particules dans l'espace. Plus particulièrement, à l'issue de la phase de trilatération, phase dans laquelle les positions approximatives des particules sont obtenues, il est nécessaire d'une part d'affiner les positions relatives et d'autre part de rechercher les différents chemins parcourus. On note que cette détermination est réalisée dans un milieu dit « discret », c'est-à-dire que ce milieu est découpé en zones (qui sont des cases d'une matrice). Cette détermination n'est pas réalisée dans un milieu « continu », qui nécessite une connaissance en temps réel de la position des particules, ce qui n'est pas le cas dans ce mode de réalisation.

*5.2.3.2.1. Positionnement des particules (détermination des positions successives)*

Chaque particule est reliée à un ou plusieurs zones de présence « PPZ » qui sont référencés par un temps.
Du fait de la procédure décrite ci-haut, la zone de présence d'une particule à un moment donné peut être constituée de plusieurs cases. Il est nécessaire pour la reconstitution des chemins de disposer d'un seul point (ou une seule case) à chaque instant. Pour cela de présence est réduite, en sélectionnant parmi les cases potentielles, celle où la particule a la plus grande probabilité de se trouver. Étant donné que la zone de présence est le résultat d'intersection d'anneaux, que dans chacun de ces anneaux la probabilité d'être au centre de l'anneau est beaucoup plus importante que celles d'être aux bords de celui-ci (du fait de l'utilisation d'une loi Normale pour le calcul de ces anneaux), la réduction de la zone de présence est effectuée en choisissant la case la plus proche du « centre » de la zone.
Une fois le nombre de points de présence réduit, la méthode d'obtention du chemin consiste à relier l'ensemble de ces points entre eux pour définir le chemin de la particule (effectué dans la phase suivante). À l'issue de cette phase de positionnement des particules, on obtient une liste des positions connues qui comprend des enregistrements comprenant chacun un temps et une position, repérée par une case dans la matrice de l'espace à cartographier.

De manière complémentaire, les inventeurs ont déterminé que l'information temporelle de la position d'une particule peut servir à affiner la détermination de sa position pour les pas de temps précédent et suivant (à une position temporelle courante) : un individu ne peut en effet se déplacer à une vitesse supérieure à un certain seuil, la probabilité qu'il ait parcouru des dizaines de mètres en deux secondes est nulle. Il est donc possible (et intéressant) d'affiner les positionnements en tenant compte de l'histoire de cette même particule. Si une particule est placée dans une zone $z1$ à un instant $t1$ donné, à un instant $t2$ suivant, elle ne peut être que dans une zone $z2$ correspondant à la zone $z1$ dilatée. La distance qu'elle a pu parcourir durant ce laps de temps dépend de la durée $ti=(t2-t1)$ et de la vitesse de déplacement maximale $vmax$ de la particule. On obtient une nouvelle densité de probabilité qui est combinée à la zone de présence de l'instant $t2$ pour obtenir une zone de présence « contrainte ». C'est sur la base de cette zone « contrainte », que la position de la particule est déterminée. La diffusion est effectuée depuis le passé et le futur : les instants précédant et suivant sont utilisés pour affiner l'instant courant.

*5.2.3.2.2. Détermination du (sous) chemin emprunté entre deux positions*

À l'issue de la phase précédente de détermination des positions successives des positions des particules, il est nécessaire d'estimer, pour chaque particule, les sous-chemins empruntés entre les positions connues pour obtenir un chemin « global » de la particule entre son entrée dans l'espace à cartographier et sa sortie de l'espace à cartographier. Cette obtention du chemin global est réalisée par une suite de calculs des sous-chemins empruntés entre les suites de positions connues. On a ainsi une itération pour l'obtention d'un chemin global qui met en œuvre des calculs de sous-chemins entre deux positions successives connues. La méthode générale est la suivante et comprend :

- une étape d'obtention de la liste des positions connues de la particule (cette liste des positions connues comprend, on le rappelle, des enregistrements comprenant chacun un temps et une position, repérée par une case dans la matrice de l'espace à cartographier, la liste étant triée par heure croissante) ;
- pour chaque couple de positions connues d'une particule, une étape de calcul d'un sous-chemin parcouru entre ces deux positions.
  Par exemple, pour une liste comprenant trois positions successives ($p1$, $p2$ et $p3$), on calcule :

  - le sous-chemin $sc1$ entre la position $p1$ et la position $p2$ ; puis
  - le sous-chemin $sc2$ entre la position $p2$ et la position $p3$.

- une étape de concaténation des sous-chemins pour former un chemin global.

Dans cette méthode générale, la détermination des sous-chemins est l'étape la plus consommatrice en termes de temps et de ressources. Pour mettre en œuvre cette étape de calcul d'un sous-chemin, les inventeurs ont eu l'idée d'utiliser deux méthodes différentes. Ces deux méthodes sont des méthodes elles-mêmes itératives. Entre une position de départ $D$ et une position d'arrivée $A$ (les deux positions étant respectivement identifiées par une case de départ $D$ et une case d'arrivée $A$), le sous-chemin est déterminé par le calcul de plusieurs positions successives. Le nombre de positions calculées dépend de la longueur du sous-chemin, et donc dépend du nombre de cases de la matrice qui séparent la case de départ $D$ de la case d'arrivée $A$.

Dans un premier mode de réalisation, pour déterminer un sous chemin emprunté, un algorithme de découverte du plus court chemin est implémenté. Il existe plusieurs algorithmes de ce type dans la littérature (par exemple l'algorithme de Dijkstra). Dans ce mode de réalisation de l'invention, l'algorithme utilisé est A* (A Star). Cet algorithme permet de parcourir un plus court chemin entre différents points de présence. Pour effacer les effets de bord (superposition de trajectoires simultanées par exemple) qui ne correspondent que rarement à des comportements humains, ***A\* (Astar) arrondi*** est utilisé. Lors du calcul des chemins des particules, chaque case est pondérée (avec une valeur donnée) en fonction du nombre de passage à chaque instant dans cette case. Une particule passant par une case à un instant donné, augmentera la pondération de cette case. Lors de la détermination de la prochaine case à utiliser pour leurs chemins, les particules ne peuvent emprunter les cases dont le poids dépasse un certain seuil ($S_p$). De plus, le poids associé aux cases décroit en fonction du temps (la valeur donnée à cette case diminue en fonction du temps). Cette procédure permet de simuler la densité de passage par chaque case et d'obtenir des trajectoires de particules qui s'évitent.

Les points de départ et d'arrivée, pour une particule, sont attribués en définissant l'entrée / la sortie de l'espace le plus proche du premier / dernier point de présence connu.

Dans un deuxième mode de réalisation, pour déterminer un sous chemin emprunté, une méthode de « Flooding » est utilisée. Le flooding est utilisée dans le monde des jeux vidéo. L'objectif originel de cette méthode est de permettre à plusieurs objets en mouvement, ayant chacun sa position propre, d'atteindre une destination commune (Exemple : plusieurs entités dispersées voulant atteindre un même point où se trouve une autre entité). Le flooding consiste à noter les cases d'un environnement en fonction de la position de cette case par rapport à une certaine destination. Les cases adjacentes à la destination auront une note de 1. Les cases adjacentes aux cases notées 1 auront une note de 2, etc.

Le flooding permet de déterminer la prochaine case de déplacement à chaque instant. La case de déplacement suivante est choisie en sélectionnant la case dont la note est la plus petite autour de la case courante, comme décrit dans le tableau ci-dessous:

| | | | | | | | | | |
|---|---|---|---|---|---|---|---|---|---|
| 5 | 5 | 5 | 5 | 5 | 6 | 7 | 8 | 9 | 9 |
| 4 | 4 | 4 | 4 | 5 | 6 | | 8 | D | 8 |
| 3 | 3 | 3 | | 5 | 6 | | **6** | 7 | 8 |
| 2 | 2 | 2 | | 6 | 5 | **5** | 6 | 7 | 8 |
| 1 | 1 | 1 | | 6 | **4** | 5 | 6 | 7 | 8 |
| 1 | A | 1 | | **3** | 4 | 5 | 6 | 7 | 8 |
| 1 | 1 | **1** | **2** | 3 | 4 | 5 | 6 | 7 | 8 |

*Avec     A la case d'Arrivée*

*D la case de Départ (ou case courante)*

*Et le poids de chaque case*

Les cases gris clair du tableau représentent des obstacles et les cases dont le poids est en gras définissent le trajet utilisé entre le départ D et l'arrivée A.

À la différence de l'algorithme utilisé traditionnellement, le flooding est appliqué par les inventeurs avec n couples (départ, arrivée) simultanément, ce qui permet d'obtenir des trajectoires de l'ensemble des particules simultanément en prenant en compte les interactions entre ces particules. Ainsi, dans ce mode de réalisation, on met en œuvre un processus itératif complexe, permettant de déterminer pas à pas les différents chemins empruntés par les particules.

Dans le monde des jeux vidéo, plusieurs particules ont une seule destination (il y a un seul point destination est recherché par plusieurs entités). L'implémentation du flooding réalisée par les inventeurs associe une destination à une unique particule. De ce fait, il est nécessaire d'associer à chaque couple (case de départ, case d'arrivée) une matrice de distance. De plus, il est nécessaire d'enregistrer dans une matrice supplémentaire, la 'capacité' de chaque case (appelée matrice de Capacité). La capacité d'une case représente le nombre maximal de particules pouvant s'y trouver simultanément. Toutes les cases de cette dernière carte sont initialisées avec une valeur fonction de la taille de la carte représentée par la matrice (la capacité d'une case de 1 mètre * 1 mètre est de 2, par exemple, car il n'est pas possible d'y loger plus de deux piétons simultanément). De plus, chaque particule posée sur sa case de départ décroit la capacité de ladite case de 1.

L'ensemble des matrices de distance par couple (départ, arrivée), ainsi que la matrice des capacités sont maintenues et modifiées à chaque itération de la façon suivante :

- Pour chaque particule non encore traitée à cette itération, choisir parmi les cases adjacentes à la case courante, la case de coût minimum, et dont la capacité n'a pas encore atteint 0.
- La particule se déplace alors sur cette case, accroit de 1 la capacité de la case qu'elle vient de quitter, et décroit de 1 la capacité de la case sur laquelle elle vient d'atterrir.
- Si pour une certaine itération, une particule ne peut pas se déplacer (toutes les cases adjacentes sont interdites), alors la particule reste immobile pour cette itération et ne modifie donc pas la carte des capacités.

L'objectif étant de prendre en compte pour chaque particule l'environnement, et les possibles interactions avec d'autres particules pour atteindre sa destination.

Le processus est ainsi itéré jusqu'à avoir déterminé l'ensemble des chemins de toutes les particules pour une période temporelle donnée. La période temporelle considérée peut être la journée, ou une fraction de journée.

Bien entendu, ces modes de réalisations sont combinables et/ou superposables. Il peut ainsi être intéressant de réaliser deux calculs avec ces deux modes de réalisation pour un même sous chemin et de déterminer quel est le sous chemin le plus efficient à l'issue de ces deux calculs. Par ailleurs, en fonction de la topologie du terrain, il peut être intéressant d'appliquer plutôt un calcul pour un sous chemin donné et un autre calcul pour le sous chemin suivant.

L'algorithme $A*$ permet une reconstruction du parcours des particules. Cependant, afin d'avoir un parcours satisfaisant à l'échelle d'un individu, il peut être intéressant d'effectuer un réel calcul d'un parcours probable de la particule. IL est en effet peu probable qu'une particule rase les murs ou effectue systématiquement des virages à 90° dans l'espace à a cartographier. Or, l'algorithme $A*$ ne permet pas à lui seul de reconstruire des parcours individuels « réalistes ». Afin de rendre des parcours individuels de particules « réalistes », il peut être intéressant d'affiner le trajet d'une particule. Pour ce faire, on introduit un composant (ou un module), qui est en charge de la reconstruction individuelle de parcours de particule. Ce module prend en entrée les différentes positions de la particule et un graphe de visibilité qui contient un point à chaque angle d'un obstacle dans l'espace de déplacement de la particule. Le module ajoute dans ce graphe les différents points de passage de la particule, chacun étant relié aux points du graphe directement dans son champ de vision. Entre deux positions successives, le module utilise un algorithme de plus court chemin sur ce graphe de visibilité pour obtenir une suite de points à parcourir. Une fois cette suite obtenue, le module utilise des splines (ou b-splines) mathématiques afin d'avoir d'obtenir un déplacement fluide.

5.3. Autres caractéristiques et avantages.

5.3.1. Caractéristiques complémentaires.

5.3.1.1. Multi-étages

Pour reconstituer des chemins entre différents étages d'un espace, des « transit » sont déterminés entre les étages, c'est-à-dire des points d'entrées et de sorties reliant des étages d'un magasin. Ces points de transit permettent de dessiner des chemins entre différents étages : Du point de départ D au point d'arrivée A, la particule sera incitée à prendre le transit entre les deux étages et un seul chemin sera déterminé.

5.3.1.2. Multi-visites

Un visiteur qui vient plusieurs fois dans la journée n'est pas récurrent pour autant. Il convient donc de déterminer les multi-visites, c'est-à-dire quand une particule vient à plusieurs reprises dans une même journée dans l'espace étudié.
Si deux PPZ1 et PPZ2 successifs d'un même visiteur ont des intervalles de temps supérieurs à une durée seuil, alors les PPZ avant PPZ1 et ceux après PPZ2 seront séparés en deux visites. Ainsi, deux chemins seront calculés et correspondront à deux visites différentes du même visiteur.

5.3.1.3. Analyse des chemins les plus utilisés

Afin de déterminer quels sont les chemins les plus utilisés, les inventeurs ont eu l'idée de superposer l'ensemble de chemins des particules. Un arbre des différentes possibilités de chemin est établi. La première branche de l'arbre représente les entrées dans l'espace, la dernière les sorties. Chaque branche de l'arbre cumule un poids de 1 à chaque passage d'une particule par cette branche. D'un point de vue algorithmique, un nœud d'entrée et un nœud de sortie sont ajoutés avec des poids de 0. Les poids permettent donc de déterminer le chemin le plus parcouru de l'entrée à la sortie de l'espace en prenant le poids le plus lourd à chaque pas. Le principe est schématisé dans l'arbre présenté en relation avec la figure 5 (Avec E : Entrée ; P : Porte ; S : Sortie). Par itération, pour trouver le 2ème chemin le plus utilisé, on retire le dernier poids des branches du chemin le plus utilisé de toutes les branches de l'arbre correspondant à ce chemin. On peut ainsi déterminer le 2ème, le 3ème, etc. chemins les plus utilisés en utilisant des itérations successives du même algorithme. D'autres méthodes de détermination du chemin le plus utilisé peuvent également être mises en œuvre.

5.3.2. Mises en œuvre par des dispositifs.

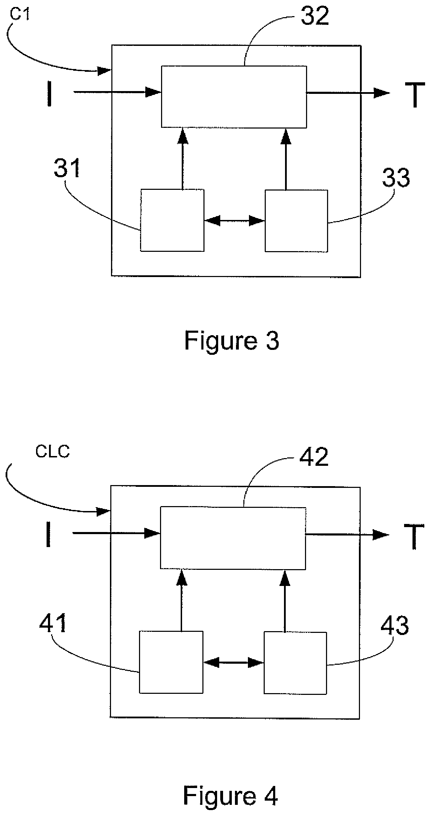

La présentation du système dans lequel l'invention prend place a principalement été décrite en termes de méthode. Cependant, le système précédemment décrit repose sur la mise en œuvre de dispositifs que l'on peut également décrire. La figure 3 illustre une structure simplifiée d'un capteur C1 d'un réseau de capteurs selon un mode de réalisation de l'invention. Par exemple, le capteur comprend une mémoire 31 constituée d'une mémoire tampon, une unité de traitement 32, équipée par exemple d'un microprocesseur, et pilotée par le programme d'ordinateur 33, mettant en œuvre un procédé de capture de données. À l'initialisation, les instructions de code du programme d'ordinateur 33 sont par exemple chargées dans une mémoire avant d'être exécutées par le processeur de l'unité de traitement 32. L'unité de traitement 32 reçoit en entrée au moins un signal de transmission de données par exemple émis à partir d'un émetteur sans fil. Le microprocesseur de l'unité de traitement 32 met en œuvre les étapes du procédé de capture de données, selon les instructions du programme d'ordinateur 33, pour se calibrer, réaliser un filtrage de données, et rendre des données capturées anonyme, lesquelles données sont transmises à un dispositif du réseau auquel le capteur est lui-même connecté.

Pour cela, le capteur comprend, outre la mémoire tampon 31,

- des moyens de calibration, qui sont par exemple un module logiciel de calibration ou un processeur prévu ç cet effet,
- des moyens de capture de données, qui sont par exemple un émetteur transmetteur sans fil (type carte wifi ou GSM) ou un module logiciel prévu à cet effet.

Ces moyens utilisent l'interface d'entrée I. Le capteur C1 comprend aussi :

- des moyens d'anonymisation des données capturées, qui peuvent être des composants de sécurité ou un module logiciel prévu à cet effet ;
- des moyens de transmission de ces données par l'interface de sortie T.

Ces moyens sont pilotés par le microprocesseur de l'unité de traitement 32.

La figure 4 illustre une structure simplifiée d'un serveur de traitement CLC selon un mode de réalisation de l'invention. Par exemple, le serveur de traitement comprend une mémoire 41 constituée d'une mémoire tampon, une unité de traitement 42, équipée par exemple d'un microprocesseur, et pilotée par le programme d'ordinateur 43, mettant en œuvre un procédé de traitement de données conforme à ce qui a été présenté préalablement. À l'initialisation, les instructions de code du programme d'ordinateur 43 sont par exemple chargées dans une mémoire avant d'être exécutées par le processeur de l'unité de traitement 42. L'unité de traitement 42 reçoit en entrée des données d'indexation d'applications logicielles. Le microprocesseur de l'unité de traitement 42 met en œuvre les étapes d'un procédé de contrôle d'une application logicielle, selon les instructions du programme d'ordinateur 43, pour réaliser des calculs de chemins empruntés par les différentes particules qui ont traversées l'espace à cartographier.

Pour cela, le serveur de traitement CLC comprend, outre la mémoire tampon 41,

- des moyens de filtrage des données, se présentant sous la forme d'un module logiciel ou matériels de type FCPGA,
- des moyens de synchronisations temporelles des données en fonction des capteurs qui ont capturées ces données, se présentant sous la forme d'un module logiciel ou matériels de type FCPGA, se présentant sous la forme d'un module logiciel ou matériels de type FCPGA,
- des moyens de trilatération des données synchronisée pour déterminer des zones de présences probables des particules, se présentant sous la forme d'un module logiciel ou matériels de type FCPGA,
- des moyens de positionnement des particules, se présentant sous la forme d'un module logiciel ou matériels de type FCPGA,
- des moyens de calcul de sous chemin entre des successions de deux positions connues des particules afin de déterminer des chemins globaux des particules, se présentant sous la forme d'un module logiciel ou matériels de type FCPGA.

Ces moyens sont pilotés par le microprocesseur de l'unité de traitement 42.

**Revendications**

1. Procédé de détermination de données représentatives d'un déplacement d'un terminal de communication, appelé particule, au sein d'un espace géographique prédéterminé, dit espace à cartographier, procédé comprenant :

   - une phase d'obtention de données représentatives de puissances d'émissions d'au moins un signal de transmission de données au sein dudit espace à cartographier, délivrant un ensemble de données capturées ;
   - une phase de filtrage des données dudit ensemble de données capturées en fonction d'au moins un paramètre de filtrage prédéterminé, délivrant un ensemble de données filtrées ;
   - une phase de calcul, à l'aide dudit ensemble de données filtrées, de données représentatives d'au moins un déplacement effectué par ladite particule au sein dudit espace à cartographier qui comprend :

     - une étape d'obtention de la liste des positions connues de ladite particule, ladite liste comprenant au moins deux positions successives ;
- pour chaque couple de positions successives de ladite liste, une étape de calcul d'un sous-chemin parcouru entre les deux positions de ce couple de positions successives, délivrant une liste de sous chemins ;
- une étape de concaténation des sous-chemins de la liste de sous chemins pour former un chemin global ;

ledit procédé étant **caractérisé en ce que** ladite étape d'obtention de la liste des positions connues de ladite particule comprend :

- une étape de détermination d'un ensemble de zones probables de positionnement (PPZ) de ladite particule en fonction :

- desdites puissances d'émission dudit ensemble de données filtrées associées aux capteurs d'un réseau de capteurs ;
- d'une représentation dudit espace à cartographier ;

- une étape de détermination d'au moins deux positions probables de ladite particule, à au moins deux moments différents, en fonction d'une loi statistique et/ou de contraintes associées audit espace à cartographier et dudit ensemble de zones probables de positionnement (PPZ).

2. Procédé selon la revendication 1, **caractérisé en ce que** ladite phase d'obtention de données comprend une étape préalable de calibration d'un réseau de capteurs disposés au sein dudit espace à cartographier, comprenant, pour au moins un capteur une étape de calcul d'une puissance de réception de référence, ladite étape de calibration mettant en œuvre un processus au cours duquel le capteur écoute et émette alternativement sur de courtes périodes de temps, de sorte à disposer d'au moins une puissance de réception d'un signal provenant d'un autre capteur afin de calculer la puissance de réception de référence en fonction de la distance séparant ce capteur dudit au moins un autre capteur.

3. Procédé selon la revendication 1, **caractérisé en ce que** ladite phase de filtrage des données comprend :

- une étape de tentative d'identification, en fonction dudit au moins un paramètre de filtrage prédéterminé, d'au moins une donnée représentative d'au moins une particule parasite au sein desdites données capturées ; et lorsque ladite étape de tentative d'identification délivre un résultat positif :
- une étape de suppression desdites données liées audit au moins une particule parasite, délivrant lesdites données filtrées.

4. Procédé selon la revendication 1, **caractérisé en ce que** ledit au moins un paramètre de filtrage prédéterminé appartient au groupe comprenant :

- une durée d'émission de signal ;
- un nombre d'occurrence de données identifiant une particule ;
- une puissance d'émission de signal.

5. Dispositif de détermination de données représentatives d'un déplacement d'un terminal de communication, appelé particule, au sein d'un espace géographique prédéterminé, dit espace à cartographier, comprenant :

- des moyens d'obtention de données représentatives de puissances d'émissions d'au moins un signal de transmission de données au sein dudit espace à cartographier, délivrant un ensemble de données capturées ;
- des moyens de filtrage des données dudit ensemble de données capturées en fonction d'au moins un paramètre de filtrage prédéterminé, délivrant un ensemble de données filtrées ;
- des moyens de calcul, à l'aide dudit ensemble de données filtrées, de données représentatives d'au moins un déplacement effectué par ladite particule au sein dudit espace à cartographier, comprenant :

- des moyens d'obtention de la liste des positions connues de ladite particule, ladite liste comprenant au moins deux positions successives ;
- pour chaque couple de positions successives de ladite liste, une la mise en œuvre de moyens de calcul d'un sous-chemin parcouru entre les deux positions de ce couple de positions successives, délivrant une liste de sous chemins ;
- des moyens de concaténation des sous-chemins de la liste de sous chemins pour former un chemin global ;

**caractérisé en ce que** les moyens d'obtention de la liste des positions connues de ladite particule, ladite liste comprenant au moins deux positions successives comprennent :

- des moyens de détermination d'un ensemble de zones probables de positionnement (PPZ) de ladite particule en fonction :

- desdites puissances d'émission dudit ensemble de données filtrées associées aux capteurs d'un réseau de capteurs ;
- d'une représentation dudit espace à cartographier ;

- des moyens de détermination d'au moins deux positions probables de ladite particule, à au moins deux moments différents, en fonction d'une loi statistique et/ou de contraintes associées audit espace à cartographier, et dudit ensemble de zones probables de positionnement (PPZ).

6. Système de détermination de données représentatives d'un déplacement d'un terminal de communication, appelé particule, au sein d'un espace géographique prédéterminé, dit espace à cartographier, comprenant :

- au moins un capteur de puissance d'émissions d'au moins un signal de transmission de données au sein dudit espace à cartographier, délivrant un ensemble de données capturées ;
- au moins un réseau de communication par lequel les données capturées sont transmises ;
- au moins un dispositif de détermination, connecté audit réseau de communication et comprenant :

- des moyens d'obtention desdites données capturées ;
- des moyens de filtrage des données dudit ensemble de données capturées en fonction d'au moins un paramètre de filtrage prédéterminé, délivrant un ensemble de données filtrées ;
- des moyens de calcul, à l'aide dudit ensemble de données filtrées, de données représentatives d'au moins un déplacement effectué par ladite particule au sein dudit espace à cartographier, comprenant :

- des moyens d'obtention de la liste des positions connues de ladite particule, ladite liste comprenant au moins deux positions successives ;
- pour chaque couple de positions successives de ladite liste, une la mise en œuvre de moyens de calcul d'un sous-chemin parcouru entre les deux positions de ce couple de positions successives, délivrant une liste de sous chemins ;
- des moyens de concaténation des sous-chemins de la liste de sous chemins pour former un chemin global ;

**caractérisé en ce que** les moyens d'obtention de la liste des positions connues de ladite particule, ladite liste comprenant au moins deux positions successives comprennent :
- des moyens de détermination d'un ensemble de zones probables de positionnement (PPZ) de ladite particule en fonction :

- desdites puissances d'émission dudit ensemble de données filtrées associées aux capteurs d'un réseau de capteurs ;
- d'une représentation dudit espace à cartographier ;

- des moyens de détermination d'au moins deux positions probables de ladite particule, à au moins deux moments différents, en fonction d'une loi statistique et/ou de contraintes associées audit espace à cartographier, et dudit ensemble de zones probables de positionnement (PPZ).

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme qui conduisent le dispositif selon la revendication 5 ou le système selon la revendication 6 à mettre en œuvre le procédé de détermination selon l'une quelconque des revendications 1 à 4.

**Patentansprüche**

1. Verfahren zum Bestimmen von Daten, die eine Verlagerung eines Kommunikationsendgeräts, das Partikel genannt wird, innerhalb eines vorgegebenen geographischen Raumes, der zu kartographierender Raum genannt wird, repräsentieren, wobei das Verfahren umfasst:

- eine Phase des Erhaltens von Daten, die Sendeleistungen wenigstens eines Datenübertragungssignals in dem zu kartographierenden Raum repräsentieren, was eine Gesamtheit erfasster Daten ergibt;
- eine Phase des Filterns der Daten der Gesamtheit erfasster Daten in Abhängigkeit von wenigstens einem vorgegebenen Filterungsparameter, was eine Gesamtheit gefilterter Daten ergibt;
- eine Phase des Berechnens, mit Hilfe der Gesamtheit gefilterter Daten, von Daten, die wenigstens eine Verlagerung repräsentieren, die von dem Partikel in dem zu kartographierenden Raum ausgeführt wird, welche umfasst:

- einen Schritt des Erhaltens der Liste der bekannten Positionen des Partikels, wobei die Liste wenigstens zwei aufeinander folgende Positionen umfasst;
- für jedes Paar aufeinander folgender Positionen der Liste einen Schritt des Berechnens eines Teilweges, der zwischen den beiden Positionen dieses Paares aufeinander folgender Positionen durchlaufen wird, was eine Liste von Teilwegen ergibt;
- einen Schritt des Verknüpfens der Teilwege der Liste von Teilwegen, um einen Gesamtweg zu bilden;

wobei das Verfahren **dadurch gekennzeichnet ist, dass** der Schritt des Erhaltens der Liste der bekannten Positionen des Partikels umfasst:

- einen Schritt des Bestimmens einer Gesamtheit von wahrscheinlichen Positionierungszonen (PPZ) des Partikels in Abhängigkeit:

- von den Sendeleistungen der Gesamtheit gefilterter Daten, die den Sensoren eines Netzes von Sensoren zugeordnet sind;
- von einer Darstellung des zu kartographierenden Raumes;

- einen Schritt des Bestimmens von wenigstens zwei wahrscheinlichen Positionen des Partikels zu wenigstens zwei verschiedenen Zeitpunkten in Abhängigkeit von einem statistischen Verteilungsgesetz und/oder von Nebenbedingungen, die dem zu kartographierenden Raum zugeordnet sind, und von der Gesamtheit von wahrscheinlichen Positionierungszonen (PPZ).

2. Verfahren nach Anspruch 1, **dadurch gekennzeichnet, dass** die Phase des Erhaltens von Daten einen vorausgehenden Schritt des Kalibrierens eines Netzes von Sensoren, die in dem zu kartographierenden Raum angeordnet sind, umfasst, der für wenigstens einen Sensor einen Schritt des Berechnens einer Referenzempfangsleistung umfasst, wobei der Kalibrierungsschritt einen Prozess ausführt, in dessen Verlauf der Sensor abwechselnd in kurzen Zeitabschnitten horcht und sendet, um über wenigstens eine Empfangsleistung eines Signals, das von einem anderen Sensor stammt, zu verfügen, um die Referenzempfangsleistung in Abhängigkeit von der Entfernung, die diesen Sensor von dem wenigstens einen anderen Sensor trennt, zu berechnen.

3. Verfahren nach Anspruch 1, **dadurch gekennzeichnet, dass** die Phase des Filterns der Daten umfasst:

- einen Schritt des Versuchens einer Identifizierung, in Abhängigkeit von dem wenigstens einen vorgegebenen Filterungsparameter, wenigstens einer Dateneinheit, die wenigstens ein parasitäres Partikel in den erfassten Daten repräsentiert; und wenn der Schritt des Versuchens einer Identifizierung ein positives Ergebnis liefert:
- einen Schritt des Unterdrückens der Daten, die mit dem wenigstens einen parasitären Partikel zusammenhängen, was die gefilterten Daten ergibt.

4. Verfahren nach Anspruch 1, **dadurch gekennzeichnet, dass** der wenigstens eine vorgegebene Filterungsparameter zu der Gruppe gehört, welche umfasst:

- eine Signalsendedauer;

- eine Anzahl, wie oft Daten auftreten, die ein Partikel identifizieren;
- eine Signalsendeleistung.

5. Vorrichtung zum Bestimmen von Daten, die eine Verlagerung eines Kommunikationsendgeräts, das Partikel genannt wird, innerhalb eines vorgegebenen geographischen Raumes, der zu kartographierender Raum genannt wird, repräsentieren, umfassend:

- Mittel zum Erhalten von Daten, die Sendeleistungen wenigstens eines Datenübertragungssignals in dem zu kartographierenden Raum repräsentieren, was eine Gesamtheit erfasster Daten ergibt;
- Mittel zum Filtern der Daten der Gesamtheit erfasster Daten in Abhängigkeit von wenigstens einem vorgegebenen Filterungsparameter, was eine Gesamtheit gefilterter Daten ergibt;
- Mittel zum Berechnen, mit Hilfe der Gesamtheit gefilterter Daten, von Daten, die wenigstens eine Verlagerung repräsentieren, die von dem Partikel in dem zu kartographierenden Raum ausgeführt wird, umfassend:

- Mittel zum Erhalten der Liste der bekannten Positionen des Partikels, wobei die Liste wenigstens zwei aufeinander folgende Positionen umfasst;
- für jedes Paar aufeinander folgender Positionen der Liste eine Anwendung von Mitteln zum Berechnen eines Teilweges, der zwischen den beiden Positionen dieses Paares aufeinander folgender Positionen durchlaufen wird, was eine Liste von Teilwegen ergibt;
- Mittel zum Verknüpfen der Teilwege der Liste von Teilwegen, um einen Gesamtweg zu bilden;

**dadurch gekennzeichnet, dass** die Mittel zum Erhalten der Liste der bekannten Positionen des Partikels, wobei die Liste wenigstens zwei aufeinander folgende Positionen umfasst, umfassen:

- Mittel zum Bestimmen einer Gesamtheit von wahrscheinlichen Positionierungszonen (PPZ) des Partikels in Abhängigkeit:

- von den Sendeleistungen der Gesamtheit gefilterter Daten, die den Sensoren eines Netzes von Sensoren zugeordnet sind;
- von einer Darstellung des zu kartographierenden Raumes;

- Mittel zum Bestimmen von wenigstens zwei wahrscheinlichen Positionen des Partikels zu wenigstens zwei verschiedenen Zeitpunkten in Abhängigkeit von einem statistischen Verteilungsgesetz und/oder von Nebenbedingungen, die dem zu kartographierenden Raum zugeordnet sind, und von der Gesamtheit von wahrscheinlichen Positionierungszonen (PPZ).

6. System zum Bestimmen von Daten, die eine Verlagerung eines Kommunikationsendgeräts, das Partikel genannt wird, innerhalb eines vorgegebenen geographischen Raumes, der zu kartographierender Raum genannt wird, repräsentieren, umfassend:

- wenigstens einen Sensor für die Sendeleistung wenigstens eines Datenübertragungssignals in dem zu kartographierenden Raum, was eine Gesamtheit erfasster Daten ergibt;
- wenigstens ein Kommunikationsnetz, über das die erfassten Daten übertragen werden;
- wenigstens eine Bestimmungsvorrichtung, die mit dem Kommunikationsnetz verbunden ist und umfasst:

- Mittel zum Erhalten der erfassten Daten;
- Mittel zum Filtern der Daten der Gesamtheit erfasster Daten in Abhängigkeit von wenigstens einem vorgegebenen Filterungsparameter, was eine Gesamtheit gefilterter Daten ergibt;
- Mittel zum Berechnen, mit Hilfe der Gesamtheit gefilterter Daten, von Daten, die wenigstens eine Verlagerung repräsentieren, die von dem Partikel in dem zu kartographierenden Raum ausgeführt wird, umfassend:

- Mittel zum Erhalten der Liste der bekannten Positionen des Partikels, wobei die Liste wenigstens zwei aufeinander folgende Positionen umfasst;
- für jedes Paar aufeinander folgender Positionen der Liste eine Anwendung von Mitteln zum Berechnen eines Teilweges, der zwischen den beiden Positionen dieses Paares aufeinander folgender Positionen durchlaufen wird, was eine Liste von Teilwegen ergibt;
- Mittel zum Verknüpfen der Teilwege der Liste von Teilwegen, um einen Gesamtweg zu bilden;

**dadurch gekennzeichnet, dass** die Mittel zum Erhalten der Liste der bekannten Positionen des Partikels, wobei die Liste wenigstens zwei aufeinander folgende Positionen umfasst, umfassen:

- Mittel zum Bestimmen einer Gesamtheit von wahrscheinlichen Positionierungszonen (PPZ) des Partikels in Abhängigkeit:

- von den Sendeleistungen der Gesamtheit gefilterter Daten, die den Sensoren eines Netzes von Sensoren zugeordnet sind;
- von einer Darstellung des zu kartographierenden Raumes;

- Mittel zum Bestimmen von wenigstens zwei wahrscheinlichen Positionen des Partikels zu wenigstens zwei verschiedenen Zeitpunkten in Abhängigkeit von einem statistischen Verteilungsgesetz und/oder von Nebenbedingungen, die dem zu kartographierenden Raum zugeordnet sind, und von der Gesamtheit von wahrscheinlichen Positionierungszonen (PPZ).

7. Computerprogrammprodukt, welches von einem Kommunikationsnetz herunterladbar ist und/oder auf einem computerlesbaren Medium gespeichert ist und/oder von einem Mikroprozessor ausführbar ist, **dadurch gekennzeichnet, dass** es Programmcodeanweisungen umfasst, welche bewirken, dass die Vorrichtung nach Anspruch 5 oder das System nach Anspruch 6 das Bestimmungsverfahren nach einem der Ansprüche 1 bis 4 durchführt.

**Claims**

1. Method for determining data representative of a movement of a communication terminal, called a particle, within a predetermined geographical area, called an area to be mapped, the method comprising:

- a phase for obtaining data representative of transmission powers of at least one data transmission signal within said area to be mapped, delivering a set of captured data;
- a phase for filtering the data of said set of captured data as a function of at least one predetermined filtering parameter, delivering a set of filtered data;
- a phase for using said set of filtered data to compute data representative of at least one movement made by said particle within said area to be mapped which comprises:

- a step of obtaining the list of known positions of said particle, said list comprising at least two successive positions;
- for each pair of successive positions in said list, a step of computing a sub-path travelled between the two positions of this pair of successive positions, delivering a list of sub-paths;
- a step of concatenating the sub-paths in the list of sub-paths to form a global path;

said method being **characterised in that** said step of obtaining the list of known positions of said particle comprises:

- a step of determining a set of probable positioning zones (PPZ) of said particle as a function of:

- said transmission powers of said set of filtered data associated with the sensors of a sensor array;
- a representation of said area to be mapped;

- a step of determining at least two probable positions of said particle, at at least two different moments, as a function of a statistical law and/or constraints associated with said area to be mapped, and said set of probable positioning zones (PPZ).

2. Method according to claim 1, **characterised in that** said phase for obtaining data includes a preliminary step of calibrating a sensor array arranged within said area to be mapped, comprising, for at least one sensor a step of computing a reference reception power, said calibration step implementing a process in which the sensor alternately listens and transmits for short periods of time, so as to provide at least one reception power of a signal originating from another sensor in order to compute the reference reception power as a function of the distance separating this sensor from said at least one other sensor.

3. Method according to claim 1, **characterised in that** said phase of filtering data comprises:

- a step of attempted identification, as a function of said at least one predetermined filtering parameter, of at least one data item representative of at least one parasite particle within said captured data; and when said attempted identification step delivers a positive result:

- a step of suppressing said data associated with said at least one parasite particle, delivering said filtered data.

**4.** Method according to claim 1, **characterised in that** said at least one predetermined filtering parameter belongs to the group comprising:

- a signal transmission duration;
- a number of occurrence of data identifying a particle;
- a signal transmission power.

**5.** Device for determining data representative of a movement of a communication terminal, called a particle, within a predetermined geographical area, called an area to be mapped, the device comprising:

- means for obtaining data representative of transmission powers of at least one data transmission signal within said area to be mapped, delivering a set of captured data;
- means for filtering the data of said set of captured data as a function of at least one predetermined filtering parameter, delivering a set of filtered data;
- means for using said set of filtered data to compute data representative of at least one movement made by said particle within said area to be mapped which comprises:

    - means for obtaining the list of known positions of said particle, said list comprising at least two successive positions;
    - for each pair of successive positions in said list, implementation of means for computing a sub-path travelled between the two positions of this pair of successive positions, delivering a list of sub-paths;
    - means for concatenating the sub-paths in the list of sub-paths to form a global path; **characterised in that** the means for obtaining the list of known positions of said particle, said list comprising at least two successive positions comprising:

        - means for determining a set of probable positioning zones (PPZ) of said particle as a function of:

            - said transmission powers of said set of filtered data associated with the sensors of a sensor array;
            - a representation of said area to be mapped;

        - means for determining at least two probable positions of said particle, at at least two different moments, as a function of a statistical law and/or constraints associated with said area to be mapped, and said probable positioning zones (PPZ).

**6.** System for determining data representative of a movement of a communication terminal, called a particle, within a predetermined geographical area, called an area to be mapped, the system comprising:

- at least one transmission power sensor of at least one data transmission signal within said area to be mapped, delivering a set of captured data;
- at least one communication network over which the captured data are transmitted;
- at least one determination device, connected to said communication network and comprising:

    - means for obtaining said captured data;
    - means for filtering the data of said set of captured data as a function of at least one predetermined filtering parameter, delivering a set of filtered data
    - means for using said set of filtered data to compute data representative of at least one movement made by said particle within said area to be mapped which comprises:

        - means for obtaining the list of known positions of said particle, said list comprising at least two successive positions;
        - for each pair of successive positions in said list, an implementation of means for computing a sub-path travelled between the two positions of this pair of successive positions, delivering a list of sub-paths;
        - means for concatenating the sub-paths in the list of sub-paths to form a global path;

**characterised in that** said means for obtaining the list of known positions of said particle comprise:

- means for determining a set of probable positioning zones (PPZ) of said particle as a function of:

- said transmission powers of said set of filtered data associated with the sensors of a sensor array;
- a representation of said area to be mapped;

- means for determining at least two probable positions of said particle, at at least two different moments, as a function of a statistical law and/or constraints associated with said area to be mapped, and of said set of probable positioning zones (PPZ).

7. Computer program product downloadable from a communication network and/or stored on a machine-readable medium and/or executable by a microprocessor, **characterised in that** it comprises program code instructions which lead the device according to claim 5 or the system according to claim 6 to implement the determination method according to any one of claims 1 to 4.

Figure 1

PPZ1

Figure 2a

PPZ2+1    PPZ2

PPZ1

Figure 2b

Figure 2c

Figure 3

Figure 4

Figure 5

Figure 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5295064 A
- US 6716101 B
- US 6246882 B
- EP 1779133 A

**Littérature non-brevet citée dans la description**

- RSSI-based indoor localization using antenna diversity and plausibility filter. *WPNC,* 2009